Europäisches Patentamt

European Patent Office

Office européen des brevets

(11) Publication number : **0 597 686 A1**

## (12) EUROPEAN PATENT APPLICATION

(21) Application number : 93308966.6

(22) Date of filing : 10.11.93

(51) Int. Cl.⁵ : **G01K 5/70**, G01K 1/02, G08C 23/00

(30) Priority : **10.11.92 GB 9223575**

(43) Date of publication of application :
**18.05.94 Bulletin 94/20**

(84) Designated Contracting States :
**DE FR GB**

(71) Applicant : **British Nuclear Fuels PLC**
**Risley Warrington Cheshire, WA3 6AS (GB)**

(72) Inventor : **Henderson, Philip James Dept. of**
**Electr. Eng.**
**& Electr. Liverpool Univ. Brownlow Hill**
**PO Box 147 Liverpool L69 3BX (GB)**
Inventor : **Pilling, Neil Anthony Dept. of Electr.**
**& Eng.**
**Electr. Liverpool Univ. Brownlow Hill**
**PO Box 147 Liverpool L69 3BX (GB)**
Inventor : **Spencer, Joseph William Dept. of**
**Electr. Eng.**
**& Electr. Liverpool Univ. Brownlow Hill**
**PO Box 147 Liverpool L69 3BX (GB)**

(74) Representative : **McCormack, Derek James**
**British Nuclear Fuels plc, Patents Section,**
**Legal Department**
**Risley, Warrington, Cheshire WA3 6AS (GB)**

(54) **Temperature detectors for remote sensing applications.**

(57)    A temperature detector for remotely detecting the temperature in a given environment which comprises a source of optical radiation, a displacement sensor which produces an optical output which varies depending upon the lateral position of the displacement sensor relative to the direction of optical radiation incident upon it, means for projecting a beam of optical radiation from the said source onto the displacement sensor and, connected to the displacement sensor, a temperature sensitive member which is capable of laterally deflecting the displacement sensor to an extent dependent upon the temperature of the environment in which the temperature sensitive member is located, the displacement sensor comprising optical filters and a mirror located behind the filters and arranged to reflect transmitted radiation back through the filters to a radiation gathering means for transmission to one or more photodetectors.

FIG.1

EP 0 597 686 A1

The present invention relates to temperature detectors for remote sensing applications.

In certain applications it is necessary to detect the temperature of an environment remotely. Such environments include hazardous environments where human access is not desirable, for example in sites or repositories employed for the disposal and burial of low and medium level waste obtained from materials employed in nuclear installations or from the reprocessing of spent nuclear fuels.

According to the present invention there is provided a temperature detector for remotely detecting the temperature in a given environment which comprises a source of optical radiation, a displacement sensor which produces an optical output which varies depending upon the lateral position of the displacement sensor relative to the direction of optical radiation incident upon it, means for projecting a beam of optical radiation from the said source onto the displacement sensor and, connected to the displacement sensor, a temperature sensitive member which is capable of laterally deflecting the displacement sensor to an extent dependent upon the temperature of the environment in which the temperature sensitive member is located, the displacement sensor comprising a mirror located behind optical filters and arranged to reflect transmitted radiation back through the filters to a radiation gathering means for transmission to one or more photodetectors.

The said displacement sensor may comprise two optical filters located side-by-side the filters having a difference in chromatic transmission when irradiated with poly-chromatic radiation, eg white light. Lateral deflection of the junction between the filters across the beam of the incident radiation causes the output dominant wavelength from the filter pair at the junction to be linearly varied with displacement distance. For example, for minimum displacement the beam of incident white light may pass through a first filter only giving a resultant output dominant wavelength $\lambda_1$. For maximum displacement the incident beam passes only through the other filter giving an output dominant wavelength of $\lambda_2$. For displacements between minimum and maximum displacement the output dominant wavelength varies linearly with displacement between $\lambda_1$ and $\lambda_2$.

Desirably, the detector according to the present invention includes means for analysing the optical output of the displacement sensor. Where the displacement sensor comprises optical filters, the said means may comprise a plurality of photodetectors adapted to measure the dominant wavelength transmitted by the filters. The means for analysing the optical output of the displacement sensor may be as described in EP 0224994A2 the description of which is incorporated herein by reference. As noted above, the transmitted radiation is reflected by a mirror located behind (relative to the projection means) the filters back through such filters to a radiation gathering means for conducting gathered radiation to the said photodetectors which may conveniently be located remotely from the filters.

The said temperature sensitive member may be a bimetallic strip whose bimetallic interface is located generally in a plane orthogonal to the surface of the displacement sensor presented to incident radiation whereby bending of the strip with an increase in temperature causes deflection of the displacement sensor across the beam of incident radiation.

Thermostatic bi-metal is an ideal temperature-to-displacement sensor. It can operate from temperatures at least as low as -100°C and up to temperatures of +500°C. The optical components used in the detector can withstand in excess of these temperatures and so the bi-metal limits the maximum theoretical temperature range. Bi-metal usually exhibits little or no hysteresis. It has a linear displacement-to-temperature relationship between +25 and +125 °C. It has an indefinite operating life providing it is not overstressed and is protected from corrosion. It is easily possible to meet these criteria in the temperature detector since the bi-metal is not significantly loaded and thereby operates in vertically a zero stress condition. It is also possible environmentally to seal the detector thereby making the bi-metal corrosion proof. Lifetimes of tens of years have been known without careful attention to these criteria. Thermostatic bi-metal is also inexpensive.

Stress relief of bi-metal is desirable before use. The cutting and forming of the bi-metal introduces stresses which if not redistributed will adversely affect its performance over time. It is therefore necessary to heat the bi-metal to 50°C or more above the maximum temperature that it will reach in use and to a minimum temperature of 200°C. If the subsequent mounting of the bi-metal within a device introduces further stresses in the bi-metal then these stresses must also be relieved by heat treating the whole assembly.

The bi-metal used in an example of a detector embodying the invention may be a simple cantilever type consisting of a length of bi-metal fixed at one end. The equation relating displacement to temperature is as follows:

$$D = \frac{K \, \Delta T \, L^2}{t}$$

D is deflection, K is a constant particular to the type of bi-metal, $\Delta T$ is the change in temperature, L is the length of the bi-metal and t is its thickness.

In an alternative embodiment including a non-metal version of the temperature sensitive member a bi-plastic element may be constructed. This may comprise a strip of PTFE (polytetrafluoroethylene) secured to a strip of plastics material by nylon screws. Heating the element by an increase in temperature of about 40°C results in a deflection of similar order to that achievable with bi-metal. Mechanical amplification of displacement is possible using different geometries.

The means for projecting a beam of radiation may comprise one or more transmission optical fibres and a lens for collimating radiation emerging from the fibre or fibres and directed toward the displacement sensor. Desirably, the end of the fibre or fibres from which radiation emerges is located at the focal point of the lens. The lens, which may be a ball lens, focuses light onto the filters and reflector arrangement which in turn sends light back through the filters, into the ball lens and back into the receiving fibre. This advantageously reduces alignment problems and the number of optical components involved as compared with the prior art. There is another benefit in that light travels through the filter twice which reduces the sensitivity of the system to unwanted modulation effects due to blemishes on the filter surface for example. Therefore, cheaper filters may be used.

The said radiation gathering means may comprise one or more optical fibres which may form duplex optically conducting channels with one or more fibres extending between the said radiation source and the projection location. The ends of the said fibre(s) are preferably at the focal distance of the said lens.

A sleeve and/or ferrule may be provided to co-locate the ends of the transmitting and receiving fibres at the focal point of the lens.

Desirably, the arrangement comprising the displacement sensor and temperature sensitive member are fitted inside a rugged water-tight housing, eg made of copper, which may have been heat treated to provide resistance against external stresses. In use such a housing may be located in a mass of concrete acting as an encapsulant for radioactive waste in a store or repository. The temperature detected by the temperature sensitive member may be observed remotely by detection of the radiation transmitted back along the fibre-optic cable from the housing incorporating the temperature sensitive member.

One important benefit of the detector according to the present invention is that the optical characteristics of the detector are largely immune to small misalignments caused for instance by thermal expansion of constructional components. The insertion loss of the detector can be limited to as little as 17dB.

Temperature detectors embodying the present invention can provide a large chromatic sensitivity, unlike ruby sensors, and over a wide temperature range, unlike liquid crystal based sensors. The detector operation is both linear and repeatable. The light source used in connection with arrangement according to the present invention is preferably broad band, eg greater than 1000nm, which enhances the light power transmitted in total than with prior art narrower source systems making the arrangement according to the invention more efficient.

An embodiment of the present invention will now be described by way of example with reference to the accompanying drawings, in which:

Figure 1 is a cross-sectional side elevation of a temperature sensing arrangement;

Figure 2 is a graph showing the transmission characteristic versus wavelength for filters used in the arrangement shown in Figure 1.

Figure 3 is a graph of optical output versus temperature obtained using the arrangement shown in Figure 1.

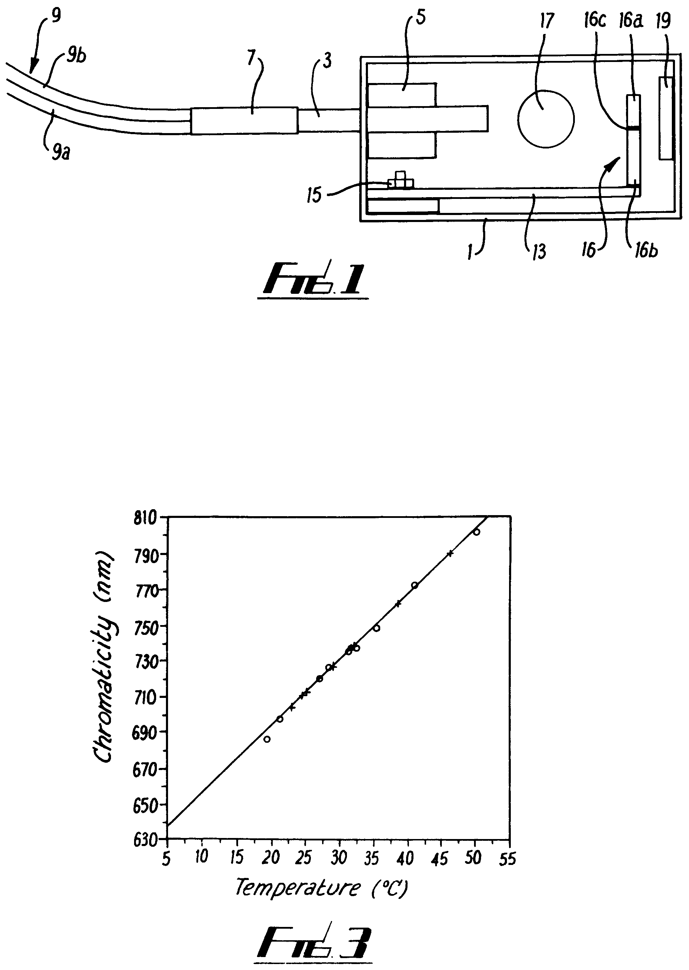

The arrangement shown in Figure 1 comprises a housing 1 and a ferrule 3 fitted through an end wall of the housing 1 and bonded thereto by a spacer 5 inside the housing 1. A duplex optically conducting fibre bundles 9a, 9b pass through a strain relieving sleeve 7 and are fixed to the ferrule 3. A white light source (not shown) is fitted to the end of the bundle 9a distant from the sleeve 7 and a photodetector (not shown) is fitted to the end of the bundle 9b distant from the sleeve 7.

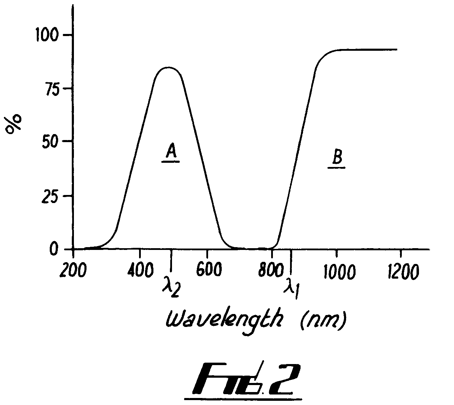

A bimetallic strip 13 is attached at one end to the inside surface of the base of the housing 1 by an attachment 15. The strip 13 is suspended nominally parallel to the base of the housing 1 but is allowed to bend at its free end inward away from the base of the housing 1 as the temperature inside the housing 1 rises. An optical filter construction 16 is attached to the free end of the strip 13. The construction 16 includes filters 16a and 16b perpendicular to the strip 13, the filters 16a, 16b having a common junction 16c. The filters have a transmission versus wavelength characteristic as shown in Figure 2. Filter 16a has a pass band which is shown by curve A and filter 16b has a pass band which is shown by curve B. For minimum displacement the beam passes through filter 16b only, giving a resulting output dominant wavelength $\lambda_2$. At maximum displacement the beam passes through filter 16a only, giving an output dominant wavelength of $\lambda_1$. For displacements between maximum and minimum the output dominant wavelength will be between $\lambda_1$ and $\lambda_2$.

Light from the source is transmitted along the fibre bundle 9a emerging from the ferrule 3. The light is collimated by a ball lens 17 and is projected as a beam onto the filters 16a, 16b and junction 16c between them. Light transmitted through the filters 16a, 16b is reflected by a mirror 19 and re-transmitted through the filters 16a, 16b to the lens 17 from which it is refocused onto the fibre bundle 9b. The reflected light is transmitted along the channel 9 to the remote photodetector.

The filters 16a, 16b have a difference in chromatic transmission, eg of about 350nm, when addressed with white light. By traversing the filter construction 16 laterally, ie in a direction perpendicular to the direction of the incident light beam, the dominant wavelength transmitted by the construction 16 varies linearly with the extent of the traverse. The extent of the traverse of the filter construction 16 is determined by the extent of the deflection of the strip 13 away from the base of the housing 1. The extent of deflection is determined by the temperature of the strip 13. The wavelength of light picked up by the fibre bundle 9b is detected by the photodetector at the end of the fibre bundle 9b remote from the sleeve 7.

Figure 3 shows a graph of results obtained for calibration purposes using an arrangement as shown in Figure 1 in which the strip 13 has a deflection range of several millimetres. The dominant wavelength detected by the photodetector is plotted vertically and the corresponding temperature of the strip 13 is plotted horizontally. As can be seen in Figure 3, the chromatic transmission varies by about 150nm substantially linearly over the temperature range 7°C to 50°C. The graph shown in Figure 3 is repeatable using the same arrangement.

In use, the housing 1 may be buried in a location whose temperature is to be monitored. For example, the housing 1 may be embedded in a mass of concrete in which radioactive waste is encapsulated in a store or repository. The end of the fibre optic cable at which the light source and photodetector are provided may be at an accessible monitoring point remote from the housing 1.

## Claims

1. A temperature detector for remotely detecting the temperature in a given environment which comprises a source of optical radiation, a displacement sensor which produces an optical output which varies depending upon the lateral position of the displacement sensor relative to the direction of optical radiation incident upon it, means for projecting a beam of optical radiation from the said source onto the displacement sensor and, connected to the displacement sensor, a temperature sensitive member which is capable of laterally deflecting the displacement sensor to an extent dependent upon the temperature of the environment in which the temperature sensitive member is located, the displacement sensor comprising optical filters and a mirror located behind the filters and arranged to reflect transmitted radiation back through the filters to a radiation gathering means for transmission to one or more photodetectors.

2. A detector as in Claim 1 and wherein the said displacement sensor comprises two optical filters located side-by-side the filters having a difference in chromatic transmission when irradiated with multi-chromatic radiation.

3. A detector as in Claim 2 and wherein the detector is such that lateral deflection of the junction between the filters across the beam of the incident radiation causes the output dominant wavelength from the filter pair at the junction to be linearly varied with displacement distance.

4. A detector as in any one of the preceding Claims and wherein the detector includes means for analysing the optical output of the displacement sensor.

5. A detector as in Claim 4 and wherein the one or more photodetectors are adapted to measure the dominant wavelength transmitted by the filters.

6. A detector as in any one of the preceding claims and wherein the said temperature sensitive member comprises a bimetallic strip whose bimetallic interface is located generally in a plane orthogonal to the surface of the displacement sensor presented to incident radiation whereby bending of the strip with an increase in temperature toward the displacement sensor causes deflection of the displacement sensor across the beam of incident radiation.

7. A detector as in any one of Claims 1 to 6 and wherein the said temperature sensitive member is a bi-plastic element.

8. A detector as in any one of the preceding claims and wherein the means for projecting a beam of radiation comprises one or more transmission optical fibres and a lens for collimating radiation emerging from the fibre or fibres and directed toward the displacement sensor.

9. A detector as in Claim 8 and wherein the end of the fibre or fibres from which radiation emerges in use is located at the focal distance of the lens.

10. A detector as in any one of the preceding claims and wherein the said radiation gathering means comprises one or more optical fibres which form duplex optically conducting channels with one or more fibres extending between the said radiation source and the means for projection.

11. A detector as in Claim 10 insofar as dependent on Claim 9 and wherein a sleeve and/or ferrule is provided to co-locate the ends of the transmitting and receiving fibres at the focal distance of the lens.

12. A detector as in any one of the preceding claims and wherein the arrangement comprising the displacement sensor and temperature sensitive member are fitted inside a rugged water-tight housing which has been treated to provide resistance against external stresses.

**Fig.1**

**Fig.3**

**FIG.2**

EP 0 597 686 A1

| European Patent Office | EUROPEAN SEARCH REPORT | Application Number EP 93 30 8966 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | GB-A-2 117 896 (STC)<br>* abstract *<br>* page 1, line 73 - line 88; figure *<br>--- | 1,4,6,10 | G01K5/70<br>G01K1/02<br>G08C23/00 |
| Y | PATENT ABSTRACTS OF JAPAN<br>vol. 9, no. 239 (P-391)(1962) 25 September 1985<br>& JP-A-60 093 324 (FUJITSU) 25 May 1985<br>* abstract *<br>--- | 1,4,6,10 | |
| A | GB-A-2 141 541 (BP)<br>* abstract *<br>* page 1, line 68 - line 124 *<br>* page 3, line 23 - line 56 *<br>* page 3, line 106 - line 109; figures *<br>--- | 1,5,8-10 | |
| A | EP-A-0 210 719 (ADVANCED FIBEROPTICS)<br>* abstract *<br>* page 5, line 8 - page 6, line 20 *<br>* figure 2 *<br>--- | 1,10-12 | |
| A | DE-A-33 07 966 (PHILIPS)<br>* abstract; figures *<br>----- | 1,6 | TECHNICAL FIELDS SEARCHED (Int.Cl.5)<br><br>G01K<br>G08C |

The present search report has been drawn up for all claims

| Place of search | Date of completion of the search | Examiner |
|---|---|---|
| THE HAGUE | 9 February 1994 | Thomas, R.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8